Europäisches Patentamt

European Patent Office

Office européen des brevets

(11) Veröffentlichungsnummer: **0 189 105 B1**

# (12) EUROPÄISCHE PATENTSCHRIFT

(45) Veröffentlichungstag der Patentschrift: 05.06.91

(51) Int. Cl.⁵ **G06K 13/08**

(21) Anmeldenummer: **86100455.4**

(22) Anmeldetag: **15.01.86**

(54) **Ausgabefach für eine Belegverarbeitungseinrichtung.**

(30) Priorität: **25.01.85 DE 3502505**

(43) Veröffentlichungstag der Anmeldung:
**30.07.86 Patentblatt 86/31**

(45) Bekanntmachung des Hinweises auf die
Patenterteilung:
**05.06.91 Patentblatt 91/23**

(84) Benannte Vertragsstaaten:
**AT BE CH DE FR GB IT LI NL SE**

(56) Entgegenhaltungen:
**DE-U- 7 247 153**
**US-A- 4 262 817**

**PATENT ABSTRACTS OF JAPAN, Band 6, Nr.
53 (P-109)[931], 8. April 1982; & JP - A - 56
168 274 (OKI DENKI KOGYO K.K.) 24.12.1981**

(73) Patentinhaber: **Siemens Aktiengesellschaft**
**Wittelsbacherplatz 2**
**W-8000 München 2(DE)**

(72) Erfinder: **Dempf, Josef, Dipl.-Ing.**
**Südstrasse 7**
**W-8933 Klosterlechfeld(DE)**
Erfinder: **Moser, Erich**
**Dorfstrasse 8**
**W-8028 Taufkirchen(DE)**

EP 0 189 105 B1

## Beschreibung

Die Erfindung bezieht sich auf ein Ausgabefach für eine Belegverarbeitungseinrichtung nach dem Oberbegriff des Patentanspruchs 1.

Derartige Belegverarbeitungseinrichtungen können beispielsweise sogenannte Kontoauszugsdrucker sein, die im Schalterraum von Banken und Sparkassen als Selbstbedienungsgerät aufgestellt sind. Sie geben dem jeweiligen Benutzer, sofern dieser im Besitz einer Berechtigungskarte, z.B. einer magnetstreifenkodierten Scheckkarte ist, die Möglichkeit, sich die letzten Kontobewegungen und damit den jeweils aktuellen Kontostand ausdrucken zu lassen. Bei bekannten Kontoauszugsdruckern erfolgt die Ausgabe der einzelnen Belege über einen Ausgabeschlitz, aus dem sie der jeweilige Benutzer endgültig herausziehen kann. Belege, die der betreffende Benutzer, aus welchen Gründen auch immer, stecken läßt, sind damit nicht nur dem jeweils nächsten Benutzer am Gerät unmittelbar zugänglich, sie blockieren darüber hinaus auch das Gerät.

Aus dem am 24.12.81 veröffentlichten JP-A-56-168274 ist eine Belegdruckvorrichtung bekannt, bei der ein nach dem Druckvorgang an das Eingabefach zurücktransportierter Beleg bei nicht rechtzeitiger Entnahme durch den Benutzer wieder eingezogen und in ein von außen nicht zugängliches Ablagefach transportiert wird.

Der vorliegenden Erfindung liegt deshalb die Aufgabe zugrunde, ein Ausgabefach für Belegverarbeitungseinrichtungen, beispielsweise für Kontoauszugsdrucker, so auszubilden, daß die von einem Benutzer versehentlich im Ausgabefach zurückgelassenen Belege auf möglichst einfache Weise in das von außen nicht zugängliche Ablagefach transportiert werden.

Diese Aufgabe wird erfindungsgemäß durch die kennzeichnenden Merkmale des Patentanspruchs 1 gelöst.

Vorteilhafte Weiterbildungen der Erfindung sind in den Unteransprüchen angegeben.

Im folgenden wird ein Ausführungsbeispiel der Erfindung anhand der Zeichnung näher erläutert. Dabei zeigen:

FIG 1     ein Ausgabefach für einen Kontoauszugsdrucker zur Entnahme eines oder mehrerer Belege,

FIG 2     das Ausgabefach nach FIG 1 mit zugehörigem Ablagefach für nicht entnommene Belege.

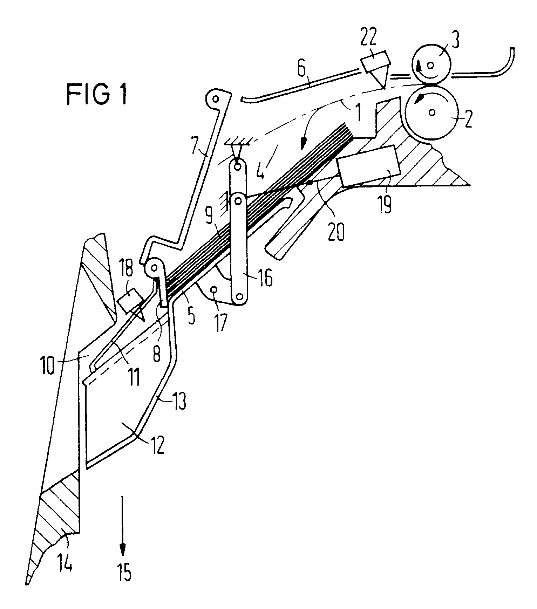

Die FIG 1 zeigt ein Ausgabefach für eine Belegverarbeitungseinrichtung, beispielsweise für einen Kontoauszugsdrucker zur Ausgabe von aus einer querperforierten Endlospapierbahn abgetrennten Einzelbelegen 1. Diese Einzelbelege 1 werden nach der Trennung von einem Walzenpaar 2, 3 erfaßt und anschließend einem Sammelfach 4 zugeführt, wo sie auf einer schräg abfallenden Belegauflagefläche 5 stapelweise abgelegt werden. Die obere Begrenzung des Sammelfachs 4 wird durch zwei Papierführungselemente 6, 7 gebildet. Das Papierführungselement 7 ist dabei zweckmäßig schwenkbar gelagert, um im Falle eines Papierstaus einen leichteren Zugang zum Sammelfach 4 zu ermöglichen. Am Ausgang des Sammelfachs 4 sind zwei schwenkbare Sperrfinger 8 vorgesehen, die sich im geschlossenen Zustand an einer abgestuften Kante der Belegauflagefläche 5 abstützen und so ein weiteres Abgleiten des Belegstapels 9 in das nachfolgende Ablagefach 10 solange verhindern, bis alle für den jeweiligen Benutzer bestimmten Belege, beispielsweise Kontoauszüge, gedruckt und im Sammelfach 4 gestapelt sind. Die Lichtschranke 22 kontrolliert den Transport durch das Walzenpaar 2, 3 sowie das einwandfreie Trennen bzw. Vereinzeln der Belege. Nach Hochschwenken der beiden Sperrfinger 8 rutschen alle im Sammelfach 4 vorhandenen Belege auf der als Wippe gelagerten Auflagefläche 5 in das Ausgabefach 10 und werden dort durch zwei Bremsfedern 11 am Herausfallen gehindert. Für die Entnahme durch die Hand des Benutzers ist an der Unterseite des in das Auflagefach 10 reichenden Teils der Belegauflagefläche 5 eine Griffmulde 12 vorgesehen, die durch ein wannenartiges Ansatzelement 13 gebildet wird. Außerdem ist das Ausgabefach 10 durch eine im Gehäusedeckel 14 vorgesehene Aussparung entsprechend vergrößert. Die Belege bzw. Kontoauszüge werden schließlich gegen den Widerstand der Bremsfedern 11 von Hand aus dem Ausgabefach 10 gezogen.

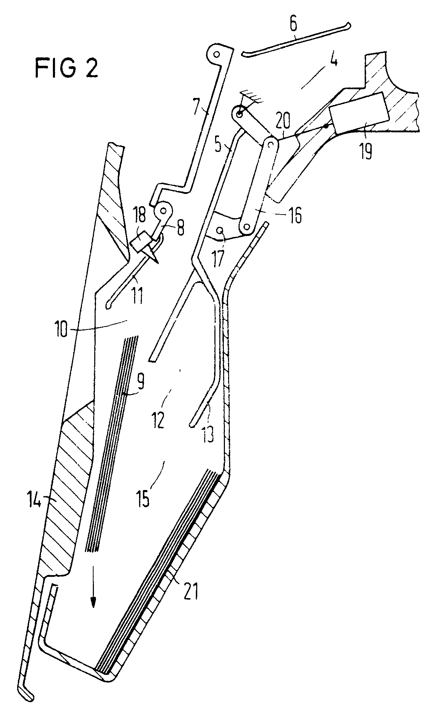

Für den Fall, daß die Belege nicht rechtzeitig entnommen werden, erfolgt aus Gründen des Datenschutzes ein Weitertransport in ein von außen nicht zugängliches Ablagefach 15. Zu diesem Zweck wird, wie aus FIG 2 ersichtlich, die Wippe über einen Kniehebelantrieb 16 um die Drehachse 17 geschwenkt. Der Kniehebelantrieb 16 wird dabei durch ein Zeitglied derart gesteuert, daß, sobald die Belege im Ausgabefach sind, die Belegauflagefläche nach Ablauf einer vorgegebenen Zeit von der Belegausgabestellung in die Ablagestellung bewegt wird. Nach Freigabe durch die Bremsfedern 11 fallen die Belege aufgrund der Schwerkraft in das darunterliegende Ablagefach 15, wo sie sich an einer schräg stehenden Stützwand 21 anlehnen. Von dort können sie dann nach Öffnen des Gehäusedeckels 14 durch das Wartungspersonal entnommen werden.

Über die im Ausgabefach 10 vorgesehene Lichtschranke 18 wird das Herausrutschen der Belege 9 in das Ausgabefach 10 nach dem Öffnen der Sperrfinger 8, ferner das Entnehmen der Belege durch den Kunden und schließlich der Zustand kontrolliert, ob nach Abschwenken der Wippe und Rückkehr in die Ausgangsstellung das Ausgabefach 10 frei von Papier ist.

Durch den in der Ausgabestellung gestreckten Kniehebel 16 wird das Schwenken der Wippe blokkiert. Damit wird das Zurückschwenken der Wippe von außen und damit ein Zugriff in das Ablagefach 15 verhindert. Der Kniehebel 16 wird dabei durch eine Rückholfederund durch einen Anschlag in einer gestreckten Lage gehalten. Mit Hilfe eines Elektromagneten 19 mit Zugstange 20 wird er schließlich wieder in seine Ausgangslage zurückgeschwenkt.

## Ansprüche

1. Ausgabefach (10) für eine Belegverarbeitungseinrichtung, deren Inbetriebnahme durch in einen Ausweisleser einsteckbare, jeweils benutzerbezogene Berechtigungskarten freigegeben wird, mit Haltevorrichtungen für den bzw. die im Ausgabefach (10) zur Entnahme bereitgestellten Beleg(e) (9) und mit einem von außen nicht zugänglichen Ablagefach (15) für nicht entnommene Belege, **dadurch gekennzeichnet,** daß die Haltevorrichtungen aus einer Belegauflagefläche (5) und wenigstens zwei auf der Belegauflagefläche sich federnd abstützenden Bremselementen (11) bestehen, daß die mittels einer Antriebsvorrichtung zwischen einer Belegausgabestellung und einer Ablagestellung hin und her bewegbare Belegauflagefläche (5) so angeordnet ist, daß in der Ablagestellung eine Öffnung in das Ablagefach (15) freigegeben wird und daß die Antriebsvorrichtung durch ein Zeitglied derart gesteuert ist, daß, sobald die Belege im Ausgabefach sind, die Belegauflagefläche nach Ablauf einer vorgegebenen Zeit von der Belegausgabestellung in die Ablagestellung bewegt wird und die Belege nach Freigabe durch die Bremselemente (11) in das Ablagefach (15) fallen.

2. Ausgabefach nach Anspruch 1, **dadurch gekennzeichnet,** daß die Belegauflagefläche (5) als Wippe gelagert ist.

3. Ausgabefach nach Anspruch 1 oder 2, **dadurch gekennzeichnet,** daß an der Unterseite der Belegauflagefläche (5) ein eine Griffmulde (12) bildendes, wannenartig ausgebildetes Ansatzelement (13) vorgesehen ist, dessen unterhalb der Auflagefläche (5) nach vorn weisende Kante in der Belegausgabestellung bündig mit der Unterkante des Ausgabefaches (10) abschließt und damit die Öffnung für das Ablagefach (15) verschließt.

4. Ausgabefach nach einem der vorhergehenden Ansprüche, **dadurch gekennzeichnet,** daß die Antriebsvorrichtung als Kniehebelantrieb (16) ausgebildet ist.

## Claims

1. Output compartment (10) for a document processing device, the operation of which is initiated in each case by user-associated authorisation cards which can be inserted into an identification means reader, having holding devices for the document(s) (9) offered for removal in the output compartment (10) and having a storage compartment (15). not accessible from the outside, for documents which have not been removed, characterised in that the holding devices consist of a document supporting surface (5) and at least two braking elements (11) resiliently supported on said document supporting surface, in that the document supporting surface (5) which can be moved backwards and forwards between a document output position and a storage position by means of a drive device is arranged in such a way that in the storage position an opening into the storage compartment (15) is freed and in that the drive device is controlled by a timing element in such a way that as soon as the documents are in the output compartment, the document supporting surface is moved from the document output position into the storage position after a prescribed time has elapsed and the documents drop into the storage compartment (15) after being released by the braking elements (11).

2. Output compartment according to Claim 1, characterised in that the document supporting surface (5) is mounted as a rocker

3. Output compartment according to Claim 1 or 2, characterised in that on the underside of the document supporting surface (5) a trough-like projecting element (13) forming a recessed grip (12) is provided, the edge of which projecting element pointing forwards below the supporting surface (5) is flush in the document output position with the lower edge of the output compartment (10) and thus closes off the opening for the storage compartment (15)

4. Output compartment according to one of the preceding claims, characterised in that the drive device is constructed as a toggle-lever drive (16).

## Revendications

1. Casier de sortie (10) pour un dispositif de traitement de documents, dont la mise en service est déclenchée par des cartes d'autorisation pouvant être enfichées dans un lecteur de cartes d'identité et associé respectivement aux utilisateurs, et comportant des dispositifs de maintien pour le ou les documents (9) mis à disposition pour leur prélèvement dans le casier de sortie (10), et un casier de dépôt (15) non accessible de l'extérieur, pour des documents non prélevés, caractérisé par le fait que les dispositifs de maintien sont constitués par une surface (5) d'appui des documents et par au moins deux éléments de freinage (11) prenant appui élastiquement sur la surface d'appui des documents, que la surface (5) d'appui des documents, qui est déplaçable en va-et-vient à l'aide d'un dispositif d'entraînement entre une position de sortie des documents et une position de dépôt, est disposée de telle sorte que, dans la position de dépôt, une ouverture est libérée dans le casier de dépôt (15), et que le dispositif d'entraînement est commandé par une minuterie de telle sorte que, dès que les documents sont dans le casier de sortie, la surface d'appui des documents est amenée, après l'écoulement d'un intervalle de temps prédéterminé, de la position de sortie des documents dans la position de dépôt, et que les documents tombent dans le casier de dépôt (15) après avoir été libérés par les éléments de freinage (11).

2. Casier de sortie suivant la revendication 1, caractérisé par le fait que la surface (5) d'appui des documents est montée à la manière d'une bascule.

3. Casier de sortie suivant la revendication 1 ou 2, caractérisé par le fait que sur la face inférieure de la surface (5) d'appui des documents est prévue un élément saillant (13), qui est agencé à la manière d'une cuvette, constitue un élément de préhension en forme d'auge (12) et dont le bord, qui est dirigé vers l'avant au-dessous de la surface d'appui (5) se termine de niveau avec le bord inférieur du casier de sortie (10) et ferme par conséquent l'ouverture du casier de dépôt (15).

4. Casier de sortie suivant l'une des revendications précédentes, caractérisé par le fait que le dispositif d'entraînement est réalisé sous la forme d'un dispositif d'entraînement à levier articulé (16).

FIG 1

FIG 2